# EUROPEAN PATENT APPLICATION

(11) **EP 4 517 372 A1**
(43) Date of publication of application: **05.03.2025**
(21) Application number: 24161045.0
(22) Date of filing: 04.03.2024
(51) Int. Cl.: G01S 7/481, G01S 7/484, G01S 7/4863, G01S 7/486, G01S 17/10

(54) **LIDAR DRIVING SYSTEM AND METHOD**

(30) Priority: 01.09.2023 KR 20230116169
(71) Applicant: Hyundai Mobis Co., Ltd., Gangnam-gu Seoul 06141 (KR)
(72) Inventor: JO, Sung Eun, 13481 Seongnam-si, Gyeonggi-do (KR)
(74) Representative: Frenkel, Matthias Alexander

(57) **Abstract**

The present invention is a technology related to a light detection and ranging (LiDAR).

Specifically, the present invention relates to a technology of resolving a phenomenon in which, when an object has a high reflectance or is positioned close thereto, a signal (received signal) returned by being reflected is strong to cause a cross-talk phenomenon (overlapping phenomenon according to the interference effect between pixels), and thus a distortion occurs in an acquired result based on a basic driving condition of a LiDAR sensor for acquiring a distance to the object, a shape of the object, and the like by collecting a signal that a laser pulse irradiated by an emitter is returned by being reflected from the object (object).

## Description

### BACKGROUND OF THE INVENTION

### Field of the Invention

The present invention relates to a light detection and ranging (LiDAR) system, and more specifically, to a LiDAR driving system capable of relatively accurately and precisely measuring not only a distance to a target object but also a shape of a target object by controlling a driving state of a LiDAR sensor to minimize a distortion phenomenon due to a received signal.

### Description of the Related Art

A light detection and ranging (LiDAR) is a sensor for providing three-dimensional data and generally measures a distance to an object by measuring a round-trip time of light using a laser.

The LiDAR is generally composed of a transmission unit, a reception unit, a driving unit, and a signal processing unit, and a housing (window) for protecting optical components from an external environment is present therein. Since the LiDAR transmits and receives laser pulses, precise optical alignment between the transmitting unit and the receiving unit is required.

In particular, since a flash LiDAR includes both an emitter and a detector formed of a 2D array, a high-precision optical alignment technology is required.

More specifically, the flash LiDAR generally includes a detector (p * q) formed of a 2D array like an emitter (m * n) formed of a 2D array, and as described above, the high-precision optical alignment technology is required.

The detector collects optical signals by operating all pixels of 1 line (1 * q) or adjacent pixels of p_i * q_j at the same time, and the emitter also transmits laser pulses by operating emitters of 1 line (1 * n) or adjacent emitters of m_i * n_j corresponding to the detector at the same time.

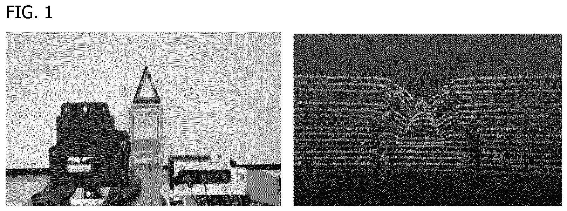

As illustrated in FIG. 1, the flash LiDAR has a problem that when the optical signal received by the detector is strong, in other words, when an object is positioned close thereto or when a reflectance of the object is high, a cross-talk phenomenon occurs, resulting in image distortion.

In this regard, Korean Patent Application Laid-Open No. 10-2021-0116415 ("DESIGN OF LIDAR SYSTEM FOR REDUCING LIDAR CROSS-TALK") discloses a design of a LiDAR system for reducing LiDAR cross-talk.

### SUMMARY OF THE INVENTION

The present invention has been made in efforts to solve the problem and is directed to providing a light detection and ranging (LiDAR) driving system capable of acquiring data with a minimized cross-talk phenomenon that may be caused by a received signal by processing driving methods of an emitter and a detector constituting a LiDAR sensor.

A light detection and ranging (LiDAR) driving system according to the present invention for solving the problem is a LiDAR driving system including an optical transmission unit including a plurality of emitters arranged in a 2-dimensional matrix structure, and an optical reception unit including a plurality of photodetection elements arranged in a 2-dimensional matrix structure, and it is preferable that the optical transmission unit sets activation patterns for a plurality of emitters using at least one of an array structure of the emitter, an array structure of the photodetection element, and the preset number of photodetection elements capable of simultaneous photodetection and controls driving states of the emitters, and the optical reception unit sets activation patterns of the photodetection elements corresponding to the activation patterns of the emitters set by the optical transmission unit and control driving states of the photodetection elements.

Furthermore, it is preferable that the LiDAR driving system may control the driving state of the emitter and the driving state of the photodetection element at the same time based on the set activation pattern.

Furthermore, it is preferable that the optical transmission unit may set the activation pattern so that at least one deactivated emitter is included between the activated emitters.

Furthermore, it is preferable that the optical transmission unit may set the activation pattern so that at least one deactivated emitter is included in each of a horizontal direction and a vertical direction based on one activated emitter.

Furthermore, it is preferable that the optical transmission unit may set the activation pattern so that the preset number of deactivated emitters is included between the activated emitters.

Furthermore, it is preferable that the optical transmission unit may determine the number of simultaneously activated emitters based on the number of photodetection elements capable of simultaneous photodetection and set the activation pattern.

Furthermore, it is preferable that the photo transmission unit may determine the number of activation patterns by comparing the total number of emitters and the number of simultaneously activated emitters, set the activation patterns according to the determined number of activation patterns, and sequentially control the driving state of the emitter and the driving state of the photodetection element at the same time using the set activation pattern, and the emitters activated by the activation patterns do not overlap each other for each activation pattern.

### BRIEF DESCRIPTION OF THE DRAWINGS

FIG. 1 is an exemplary view illustrating a result of measuring a target with a high reflectance through the driving of a conventional light detection and ranging (LiDAR).
FIG. 2 is an exemplary view illustrating an activation pattern set by a LiDAR driving system according to one embodiment of the present invention.
FIG. 3 is an exemplary view illustrating a result of measuring a target with a high reflectance by driving a LiDAR by the LiDAR driving system according to one embodiment of the present invention.

### DETAILED DESCRIPTION OF THE INVENTION

The above-described purpose, features, and advantages of the present invention will become clearer through the following embodiments in conjunction with the attached drawings. The following specific structural and functional descriptions are merely illustrative for the purpose of describing embodiments according to the concept of the present invention, and the embodiments according to the concept of the present invention may be implemented in various forms and should not be construed as limited to embodiments in the specification or the application. Since the embodiments according to the concept of the present invention may be variously changed and may have various forms, specific embodiments will be illustrated in the drawings and described in detail in the specification or the application. However, it should be understood that this is not intended to limit the embodiments according to the concept of the present invention to a specific form and includes all changes, equivalents, and substitutions included within the spirit and technical scope of the present invention. The term such as first or second may be used to describe various components, but the components are not limited by the term. The terms are used only for the purpose of distinguishing one component from another, and for example, a first component may be referred to as a second component, and similarly, the second component may also be referred to as the first component without departing from the scope according to the concept of the present invention. It should be understood that when a first component is described as being "connected" or "coupled" to a second component, the first component may be directly connected or coupled to the second component, but a third component may also be present therebetween. On the other hand, it should be understood that when a first component is described as being "directly connected" or "directly coupled" to a second component, a third component is not present therebetween. Other expressions for describing the relationship between components, in other words, expressions such as "between" and "directly between" or "adjacent to" and "directly adjacent to" should be construed in the same manner. The terms used in the specification are only used to describe specific embodiments and are not intended to limit the present invention. The singular expression includes the plural expression unless the context clearly dictates otherwise. In the specification, it should be understood that the term "comprise" or "have" is intended to specify that a stated feature, number, step, operation, component, part, or a combination thereof is present and does not preclude the possibility of the presence or addition of one or more other features, numbers, steps, operations, components, parts, or combinations thereof. Unless defined otherwise, all terms used herein, including technical or scientific terms, have the same meaning as commonly understood by those of ordinary skill in the art to which the present invention pertains. The terms defined in a generally used dictionary should be construed as having meanings that coincide with the meanings of the terms from the context of the related technology and are not construed as an ideal or excessively formal meaning unless clearly defined in the specification. Hereinafter, the present invention will be described in detail by describing preferred embodiments of the present invention with reference to the accompanying drawings. The same reference numerals in each drawing indicate the same member.

In addition, a system refers to a set of components including devices, mechanisms, and units that are organized and interact regularly to perform necessary functions.

A light detection and ranging (LiDAR) driving system according to one embodiment of the present invention is a technology of resolving a phenomenon in which, when an object has a high reflectance or is positioned close thereto, a signal (received signal) returned by being reflected is strong to cause a cross-talk phenomenon (overlapping phenomenon according to the interference effect between pixels), and thus a distortion occurs in an acquired result based on a basic driving condition of a LiDAR sensor for acquiring a distance to the object, a shape of the object, and the like by collecting a signal that a laser pulse irradiated by an emitter is returned by being reflected from the object (object).

Therefore, it is possible to provide information about objects positioned around a LiDAR relatively accurately, thereby improving the accuracy and reliability of the recognition of nearby objects.

A flash LiDAR driven by the LiDAR driving system according to one embodiment of the present invention includes an emitter for repeatedly outputting (irradiating) laser pulses, a condenser lens for transmitting the output laser pulses, a scanner for obtaining three-dimensional data in a wide area, a reception lens for collecting a signal returned by being reflected from a target, a detector for detecting the collected signal, and a signal processing unit for analyzing a distance to the target, a shape of the target, and the like using a transmission signal and a reception signal.

In particular, the flash LiDAR is composed of an emitter (m * n) of a 2D array and a detector (p * q) of a 2D array, and the emitter is generally formed of a laser, a transmitter, and a vertical cavity surface emitting laser (VCSEL), and the detector is generally formed of a single-photon avalanche diode (SPAD).

Describing the conventional flash LiDAR driving method, the flash LiDAR is driven by a 1D addressable method, and when an emitter and a detector are formed in the same array, that is, when m = p, 1 * n = 1 * q, and all emitters of 1 line (1 * n) are driven to irradiate light at the same time, and correspondingly, all photodetection elements of 1 line (1 * q) are driven to be detected at the same time.

As another example, the flash LiDAR is driven by a 2D addressable method, and when the emitter and the detector are configured in the same array, that is, when m = p and n = q, m_i * n_j = p_i * q_j, and adjacent emitters based on a specific emitter (m_i * n_j) are driven to irradiate light at the same time, and correspondingly, adjacent photodetection elements based on a specific detector (p_i * q_j) are driven to be detected at the same time.

As described above, due to the conventional flash LiDAR driving method, when an object to be detected has a high reflectance or positioned close to a LiDAR sensor, a reception signal is strong to cause a cross-talk phenomenon.

In order to solve such a problem, it is preferable that the LiDAR driving system according to one embodiment of the present invention is controlled to be driven by a random addressable method and sets an activation pattern to prevent adjacent emitters from irradiating light at the same time, that is, prevent the emitters driven at the same time from being adjacent to each other.

Based on the above description, the present invention relates to a LiDAR driving system including an optical transmission unit (configuration including an emitter and a condenser lens) including a plurality of emitters arranged in a 2-dimensional matrix structure (2D), and an optical reception unit (configuration including an photodetection element/detector and a reception lens) including a plurality of photodetection elements arranged in a 2-dimensional matrix structure (2D).

The technical feature of the VCSEL is that when the 2D matrix structure (m * n) in which the plurality of emitters included in the optical transmission unit are arranged and the 2D matrix structure (p * q) in which the plurality of photodetection elements included in the optical reception unit are arranged are symmetric, that is, when m = p and n = q, photodetection elements positioned at positions corresponding to the irradiating emitters are driven at the same time.

Based on this, it is preferable that the optical transmission unit sets activation patterns for a plurality of emitters using at least one of the array structure (m * n) of the emitter, the array structure (p * q) of the photodetection element, and the preset number (x * y) of photodetection elements capable of simultaneous photodetection.

Of course, a driving state of the emitter is controlled by using the set activation pattern.

In addition, the optical reception unit sets an activation pattern of the photodetection element corresponding to the activation pattern of the emitter set by the optical transmission unit and controls the driving state of the photodetection element accordingly. Therefore, it is preferable that a state of the LiDAR driving system according to one embodiment of the present invention is controlled so that an emitter and an photodetection element positioned at the same position, that is, at the corresponding position are driven at the same time, and the position at which the driving state is controlled is set based on the activation pattern.

As a result of analysis through various experiments, it could be seen that when adjacent emitters based on any one irradiating emitter were not irradiated at the same time, even in the photodetection elements corresponding thereto, adjacent photodetection elements based on the photodetection element for detecting a reception signal did not detect the reception signal at the same time, and thus the unnecessary noises were minimized, thereby minimizing the distortion of acquired data, and based on this, it is preferable to set the most optimal activation pattern through the optical transmission unit.

It is preferable to set the activation pattern so that at least one deactivated emitter is included between activated emitters to prevent emitters adjacent to any one irradiating emitter from irradiating light at the same time, that is, prevent photodetection elements adjacent to any one detected photodetection element from being detected at the same time.

Specifically, it is preferable to set the activation pattern so that at least one deactivated emitter is included in each of a horizontal direction and a vertical direction based on one activated emitter.

For example, it is preferable to set the activation pattern of the emitter by controlling an emitter at a position (1, 2) close to a position (1, 1) in the horizontal direction and an emitter at a position (2, 1) close thereto in the vertical direction to be deactivated when an emitter at the position (1, 1) is activated.

As described above, since the optical reception unit sets the activation pattern of the photodetection element to correspond to the activation pattern of the emitter set by the optical reception unit, as a specific example, when an photodetection element at the position (1, 1) is controlled to be activated, an photodetection element at the position (1, 2) and an photodetection element at the position (2, 1) are controlled to be deactivated to set the activation pattern of the photodetection element.

In addition, the optical transmission unit may set the activation pattern so that the preset number of deactivated emitters is included between the activated emitters.

Specifically, the activation pattern may be set so that the preset number of deactivated emitters is included in each of the horizontal direction and the vertical direction based on one activated emitter.

In this case, the preset number means a pixel interval that may be simultaneously detected by a plurality of photodetection elements included in the optical reception unit, which may be different depending on a specification of the photodetection element, and the present invention is not limited thereto.

For example, when the emitter at the position (1, 1) is activated and the pixel interval that may be simultaneously detected by the photodetection element is 10 pixels, the optical transmission unit sets the activation pattern so that the emitters at positions therebetween are deactivated to activate emitters at positions (1, 1), (1, 11), (1, 21), and the like.

In addition, it is preferable that the optical transmission unit determines the number of emitters activated at the same time based on the preset number of photodetection elements capable of simultaneous photodetection and sets the activation pattern. In other words, when the number of pixels that may be simultaneously detected by the photodetection element is 3 pixels by the specifications of the plurality of photodetection elements included in the optical reception unit, the optical transmission unit may set the activation pattern so that only three emitters among all emitters are activated, and the activated emitters and the deactivated emitters may be controlled according to the above-described embodiment.

However, the LiDAR driving system according to one embodiment of the present invention is to minimize the cross-talk phenomenon of the LiDAR, and to this end, since it is preferable that the simultaneously irradiating emitters are positioned as far as possible, it is preferable to set the activation pattern while specifying positions of other activated emitters in consideration of a pixel interval that may be simultaneously detected by the photodetection element after specifying a position of one activated emitter and controlling an emitter positioned between the specified emitters to be deactivated.

In this case, since a driving state of the corresponding emitter (activated emitter) is controlled simultaneously by the set activation pattern, it is preferable to determine the number of activated emitters based on the preset number of photodetection elements capable of simultaneous photodetection.

As another example, it is preferable that the optical transmission unit determines the number of activation patterns by comparing the total number of emitters to the preset number of photodetection elements capable of simultaneous photodetection.

In other words, when the total number of emitters is 100 and the number of preset photodetection elements capable of simultaneous photodetection is 10 (10 pixels), data on the desired object (object) are acquired by using all emitters/all photodetection elements only when the corresponding LiDAR sequentially drives the activation pattern at least 10 times.

Therefore, it is preferable that the optical transmission unit determines the number of activation patterns by comparing the total number of emitters and the preset number of photodetection elements capable of simultaneous photodetection, and then sets the activation pattern according to the determined number of activation patterns.

Then, the optical transmission unit sequentially controls driving states of the emitters using the set activation pattern, and at the same time, the optical reception unit sequentially controls driving states of the photodetection elements using the activation patterns corresponding to the activation patterns set by the optical transmission unit as well.

In this case, it is preferable that the emitters activated by the activation patterns do not overlap each other for each activation pattern. In other words, when the optical transmission unit sets activation patterns included in one routine in which all emitters and all photodetection elements are driven once, it is preferable to ensure that emitters activated for each activation pattern do not overlap each other.

For example, when m = n = p = q = 100, the preset number of photodetection elements capable of simultaneous photodetection is 100 pixels and the pixel interval that may be simultaneously detected by the photodetection element is 10 pixels, the number of activation patterns included in one routine is 10, and activation patterns corresponding to the first order are set so that emitters at positions (1, 1), (1, 11), (1, 21), ···, (1, 91), (11, 1), (11, 11), ···, and (91, 91) are activated and set so that emitters at other positions are deactivated. Subsequently, activation patterns corresponding to the second order are set so that emitters at positions (1, 2), (1, 12), (1, 22), ···, (1, 92), (11, 2), (11, 12), ··· , and (91, 92) are activated and set so that emitters at other positions are deactivated. Therefore, all emitters are activated once in one routine, and emitters adjacent to the activated emitter are controlled to be deactivated.

Of course, the operation of the photodetection element is also controlled to correspond thereto.

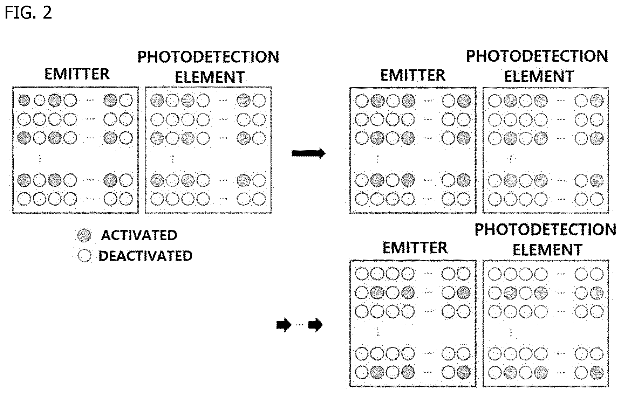

More simply describing the control of the driving state of the emitter and the photodetection element through the LiDAR driving system according to one embodiment of the present invention, when an emitter at a specific position is activated, it is preferable to set activation patterns so that emitters in adjacent rows and columns are deactivated, which is as illustrated in FIG. 2.

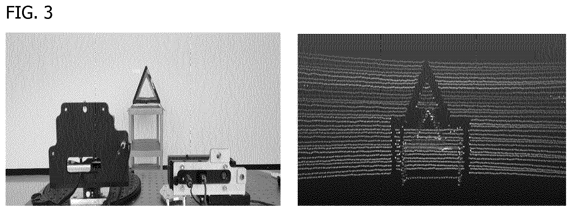

As described above, the photodetection element at the position corresponding to the emitter at the activated position is activated, and at this time, by setting the activation patterns of the emitters or the photodetection elements so that other emitters or photodetection elements adjacent to the activated emitter or photodetection element are deactivated, as illustrated in FIG. 3, it can be seen that when the same object as that of FIG. 1 is measured, it is possible to acquire more accurate data.

The above-described present invention may be implemented as computer-readable codes on a medium on which a program is recorded. The computer-readable medium includes any type of recording device in which data that may be read by a computer system are stored. Examples of the computer-readable media include a hard disk drive (HDD), a solid state disk (SSD), a silicon disk drive (SDD), a read only memory (ROM), a random access memory (RAM), a CD-ROM, a magnetic tape, a floppy disk, an optical data storage device, and the like, and also include one implemented in the form of carrier waves (e.g., transmission via Internet). In addition, the computer may include the LiDAR driving system of the present invention.

According to the LiDAR driving system according to the present invention, it is possible to resolve the phenomenon in which, when the object has a high reflectance or is positioned close thereto, the signal (received signal) returned by being reflected is strong to cause the cross-talk phenomenon (overlapping phenomenon according to the interference effect between pixels), and thus the distortion occurs in the acquired result based on the basic driving condition of the LiDAR sensor for acquiring the distance to the object, the shape of the object, and the like by collecting the signal that the laser pulse irradiated by the emitter is returned by being reflected from the object (object).

Specifically, by setting the activation patterns of all emitters so that the emitters adjacent to the activated emitter are deactivated, it is possible to minimize the noise generated from the receive signal, and in addition, by setting the same activation pattern as the activation pattern of the emitter so that only the photodetection element at the position corresponding to the activated emitter is activated to have minimized noise, it is possible to acquire more clean and accurate data.

Although the preferred embodiments of the present invention have been described above, the embodiments disclosed in the present invention are not intended to limit the technical spirit of the present invention but are only for description. Therefore, the technical spirit of the present invention includes not only each disclosed embodiment, but also a combination of the disclosed embodiments, and furthermore, the scope of the technical spirit of the present invention is not limited by these embodiments. In addition, those skilled in the art to which the present invention pertains can variously change and modify the present invention without departing from the spirit and scope of the appended claims, and all such appropriate changes and modifications should be regarded as belonging to the scope of the present invention as equivalents.

## Claims

1. A light detection and ranging (LiDAR) driving system comprising:
an optical transmission unit including a plurality of emitters arranged in a 2-dimensional matrix structure;; and
an optical reception unit including a plurality of photodetection elements arranged in a 2-dimensional matrix structure,
wherein the optical transmission unit sets activation patterns for a plurality of emitters using at least one of an array structure of the emitter, an array structure of the photodetection element, and a preset number of photodetection elements capable of simultaneous photodetection and controls driving states of the emitters, and
wherein the optical reception unit sets activation patterns of the photodetection elements corresponding to the activation patterns of the emitters set by the optical transmission unit and controls driving states of the photodetection elements.

2. The LiDAR driving system of claim 1, wherein the LiDAR driving system controls the driving state of the emitter and the driving state of the photodetection element at a same time based on the set activation pattern.

3. The LiDAR driving system of claim 1 or 2, wherein the optical transmission unit sets the activation pattern so that at least one deactivated emitter is included between the activated emitters.

4. The LiDAR driving system of any one of claims 1 to 3, wherein the optical transmission unit sets the activation pattern so that at least one deactivated emitter is included in each of a horizontal direction and a vertical direction based on one activated emitter.

5. The LiDAR driving system of claim 3 or 4, wherein the optical transmission unit sets the activation pattern so that the preset number of deactivated emitters is included between the activated emitters.

6. The LiDAR driving system of any one of claims 1 to 5, wherein the optical transmission unit determines a number of simultaneously activated emitters based on a number of photodetection elements capable of simultaneous photodetection and sets the activation pattern.

7. The LiDAR driving system of claim 6,
wherein the photo transmission unit is configured to:
determine a number of activation patterns by comparing a total number of emitters and the number of simultaneously activated emitters;
set the activation patterns according to the determined number of activation patterns; and
sequentially control the driving state of the emitter and the driving state of the photodetection element at a same time using the set activation pattern, and
wherein the emitters activated by the activation patterns do not overlap each other for each activation pattern.

8. A method of controlling a light detection and ranging (LiDAR) driving system including an optical transmission unit including a plurality of emitters arranged in a 2-dimensional matrix structure, and an optical reception unit including a plurality of photodetection elements arranged in a 2-dimensional matrix structure, the method comprising:
setting, by the optical transmission unit, activation patterns for a plurality of emitters using at least one of an array structure of the emitter, an array structure of the photodetection element, and a preset number of photodetection elements capable of simultaneous photodetection and controlling driving states of the emitters, and
setting, by the optical reception unit, activation patterns of the photodetection elements corresponding to the activation patterns of the emitters set by the optical transmission unit and controlling driving states of the photodetection elements.

9. The Method of claim 8, further including:
controlling the driving state of the emitter and the driving state of the photodetection element at a same time based on the set activation pattern.

10. The Method of claim 8 or 9, wherein the optical transmission unit is configured for setting the activation pattern so that at least one deactivated emitter is included between the activated emitters.

11. The Method of any one of claims 8 to 10, wherein the optical transmission unit is configured for setting the activation pattern so that at least one deactivated emitter is included in each of a horizontal direction and a vertical direction based on one activated emitter.

12. The Method of claim 10 or 11, wherein the optical transmission unit is configured for setting the activation pattern so that the preset number of deactivated emitters is included between the activated emitters.

13. The Method of any one of claims 8 to 12, wherein the optical transmission unit is configured for determining a number of simultaneously activated emitters based on a number of photodetection elements capable of simultaneous photodetection and is configured for setting the activation pattern.

14. The Method of claim 13,
wherein the photo transmission unit is configured for:
determining a number of activation patterns by comparing a total number of emitters and the number of simultaneously activated emitters;
setting the activation patterns according to the determined number of activation patterns; and
sequentially controlling the driving state of the emitter and the driving state of the photodetection element at a same time using the set activation pattern, and
wherein the emitters activated by the activation patterns do not overlap each other for each activation pattern.
